# EUROPEAN PATENT APPLICATION

(11) **EP 1 378 735 A1**
(43) Date of publication of application: **07.01.2004**
(21) Application number: 02077661.3
(22) Date of filing: 03.07.2002
(51) Int. Cl.: G01J 3/46

(54) **Method of determining a colour of a segment for a position in a set of teeth**

(71) Applicant: Universiteit van Amsterdam, 1012 WX Amsterdam (NL)
(72) Inventor: Feilzer, Albert Joseph, 1066 EA Amsterdam (NL); Kleverlaan, Cornelis Johannes, 1066 EA Amsterdam (NL); Dozic, Alma, 1066 EA Amsterdam (NL)
(74) Representative: Prins, Adrianus Willem

(57) **Abstract**

Method for determining a desired colour of a first segment for forming a portion of a set of teeth on a desired position within the set of teeth, wherein the method comprises:
- determining the colour of at least a second segment within the set of teeth,
characterised in that, the method further comprises:
- determining the position of the at least second segment within the set of teeth; and
determining the colour of the first segment according to a predetermined relationship between the colour and the position of the at least second segment and the desired position for the first segment.

## Description

The invention is related to a method for determining a desired colour of a first segment for forming a portion of a set of teeth on a desired position within a set of teeth, wherein the method comprises determining the colour of at least a second segment within the set of teeth.

Such a method is known *per se* and is often carried out by a dentist or a dental technician when a missing segment of a set of teeth is to be produced for addition to an existing set of teeth. In this case, the first segment is the segment to be produced. This segment may be a part of a tooth which needs to be replaced as the original part has for instance broken off. However, it is also possible that the first segment is supposed to be added to the set of teeth at a position of a natural gap between two teeth. This segment may also comprise a completely new tooth. Ideally, the colour of the segment to be produced is such that after placement of the produced segment within the set of teeth, the set of teeth come across as a natural set of teeth or as a set of teeth according to the clients' wish. In other words, it is preferably hardly noticeable if at all that the produced segment is man-made and/or added to the set of teeth at a stage which is different from the stage wherein other parts of the set of teeth were composed. For determining the colour of the segment to be produced, often the colour of at least a second segment within a set of teeth is compared with a number of mutually different colour samples. The colour sample which provides the closest match to the colour of the at least second segment is then selected to be the colour of the segment to be produced.

A problem is that the colour of the second segment within the set of teeth may be different from the colour of which the segment to be produced should have in order to end up with a set of teeth in which it is at least most unnoticeable that the man-made segment has been added to the set of teeth.

It is on object of the invention to provide a method for determining a colour of a first segment for a position within a set of teeth allowing for a closer match of the determined colour with a desired colour in comparison to the matches possible with a method of prior art.

This object is reached by a method according to the invention which is characterized is that, the method further comprises:
- determining the position of the at least second segment of the set of teeth; and
- determining the colour of the first segment according to a predetermined relationship between the colour and the position of the at least second segment and the desired position for the first segment.
   Due to the predetermined relationship the colour of the segment to be produced is not necessarily equal to the colour of the second segment. The predetermined relationship provides an indication as to how much the colour of the segment to be produced for a position where this segment is to be added to the set of teeth, should deflect from the colour of the second segment. Hence, it is possible to produce a segment with a colour which is not necessarily identical to the colour of the second segment, but rather a colour which allows for a more natural or desired appearance of the first segment within a set of teeth. In other words , the colour determined with this method for the first segment is likely to be closer to the desired colour for the first segment.
   In a preferred embodiment of a method according to the invention the method comprises
- using a digital camera for measuring the colour and the position of the at least second segment.

Such a camera is relatively cheap, widely available and easy to handle.

In a further preferred embodiment of a method according to the invention the method comprises colourimetrically analysing an image obtained by the digital camera for obtaining an objective quantification for each colour. It is herewith possible to characterise each colour and define a measured colour in well-known colour standards such as for instance IEC 61966-2-1 and ISO/CIE 10527.

This allows for quantitatively and therefore objectively determining the colour of the segment which is to be produced for a position within the set of teeth.

It is further preferred that the method comprises establishing the predetermined relationship using at least a determined colour and position of a plurality of segments within the set of teeth. In this case, the predetermined relationship will be based on the particulars of the set of teeth. By establishing the predetermined relationship on a very large number of segments within the set of teeth, the accuracy by which the colour of the first segment is determined may be greatly enhanced. In case the plurality of segments comprise segments which are around the position for the first segment, the colour of the first segment can be determined by interpolation. However, it is also possible that the colour of the first segment is determined by extrapolation.
Another embodiment of a method according to the invention is characterized in that the method comprises establishing the predetermined relationship using a database in which is stored information about the relationship between the position and the colour of a number of segments within at least one other set of teeth. This may be advantageous in cases where a determination of the colour to be produced for the first segment using at least the determined colour and position of a plurality of segments within the set of teeth, still allows for a choice within a band of colours which are all suitable for the segment to be produced. In other words, using this particular embodiment, it is possible to find with a higher accuracy the best colour for the segment to be produced by comparing with the colours of segments within at least one other set of teeth.

In an even more preferred embodiment of a method according to the invention, the method comprises establishing the predetermined relationship using at least a personal parameter of a patient for whom the colour of the first segment is to be determined. This has *inter alia* the advantage that expectations with regard to the possible change of the colour in the future may be taken into account when the colour of the first segment is to be determined. The personal parameter may for instance be related to an age of the patient, a nutricial pattern of the patient or a personal preference of the patient.

In a further embodiment the method may comprise showing on a display the colour of the first segment and the colour of the at least second segment. It is in this case possible to visualise the possible differences between the colour of the first segment and the colour of the at least second segment. This further allows for agreement on the colour to be determined or adjustment of the colour to be determined.

It is particularly preferable that the method comprises showing on the display the colour of the first segment and the colour of the at least second segment in relation to their mutual positions within the set of teeth. It is then not only possible to see the differences in colour but also possible to view how noticeable this difference would be when the first segment is placed in its position within the set of teeth.

It is even more preferable that the method comprises showing on the display, the colour of each segment of the set of teeth and the position of each segment within the set of teeth. A gradual change from the colour of the at least second segment towards the colour of the first segment, if present at all, becomes in this case visible. Again, this allows for agreement on the colour which is to be determined for the first segment, or slight adjustment of this colour.

The invention is further related to a computer comprising a processor which is arranged to carry out steps of such a method.

The invention is also related to a computer program product comprising code portions for carrying out the steps of such a method when running on a programmable system.

The invention is further illustrated by the following, non-limiting drawing. Herein shows:
figure 1 systematically an embodiment of the method according to the invention;
figure 2 an example of a predetermined relationship between the value of a colour defining parameter at a position within a set of teeth and the value of that colour defining parameter at an other position within that set of teeth.

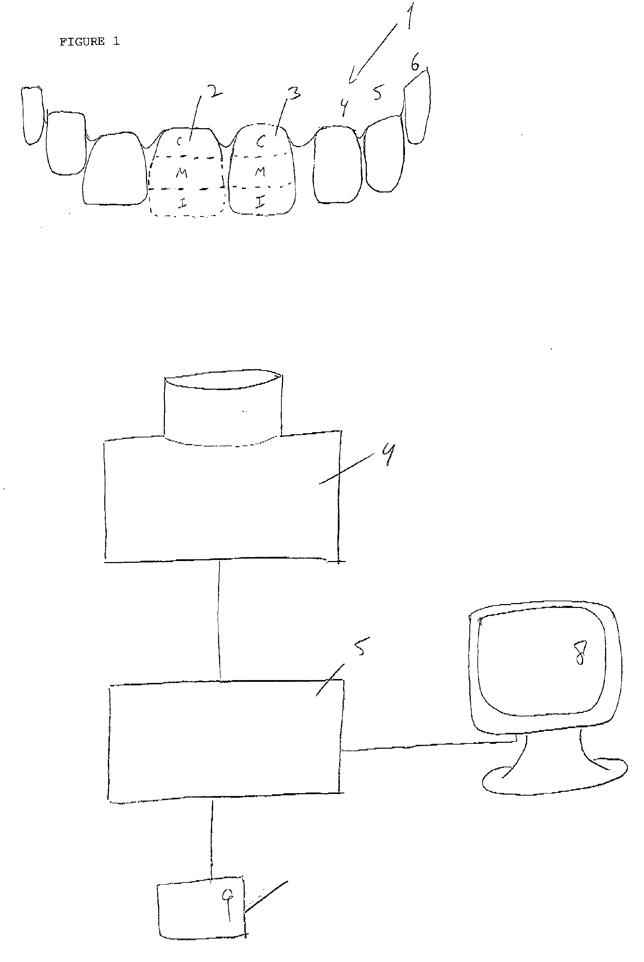

Figure 1 shows a part of a set of teeth 1 wherein each tooth is divided in three tooth-segments, namely Cervical segment C, middle segment M, and an incisal segment I as shown in tooth 2 and 3. Tooth 2 lacks the middle segment and the incisal segment I. For determining a colour of the missing I of tooth 2, the colour of a second segment within the set of teeth is determined. According to the invention, not only the colour of the second segment is determined, but also the position of the second segment is determined. The colour of the missing segments M and I of tooth 2 is then determined according to a predetermined relationship between the colour and the position of the second segment and the position of the missing segments M, I of tooth 2.

In more detail, the method according to the invention may be carried out as follows. For instance, with a digital camera 4 an image is obtained of a part of the set of teeth 1. The digital camera 4 may be an Olympus 2.4 or any other suitable camera. For obtaining the image a ring-flash may be used. It may be preferable to use a holder designed to keep the set of teeth at a fixed position and a camera holder such that a standard distance between the set of teeth and the lens and a standard viewing angle from the lens to the set of teeth. This enhances reproducibility of the method. Usually a standard colour sample is placed with the set of teeth such that the set of teeth and the standard colour sample are simultaneously recorded by the digital camera 4. This allows for the application of standard white balancing procedures as well-known and well-documented in the prior art. Every colour obtained by the digital camera can subsequently be analysed and defined in three standard colour parameters such asXYZ, CIE L*a*b*, RGB or CMYK. This colorimetric analysis of the image as obtained by the digital camera is carried out by a computer 5.

The colour of any segment within the part of set of teeth 1 may also be obtained by any other suitable method as long as the colour can be defined by the standard colour parameters. The value of a standard colour parameter at a position within the set of teeth is then used to determine the value of the same standard colour parameter for the position of the missing segment. For this purpose, use is made of a predetermined relationship between the value of a standard colour parameter at a position within the set of teeth and the value of the standard colour parameter at the position of the missing segment within the set of teeth. This predetermined relationship may for instance be based on experimental data obtained from either other sets of teeth or the set of teeth which belongs to a person for whom a segment is to be produced for placing within his or her set of teeth.

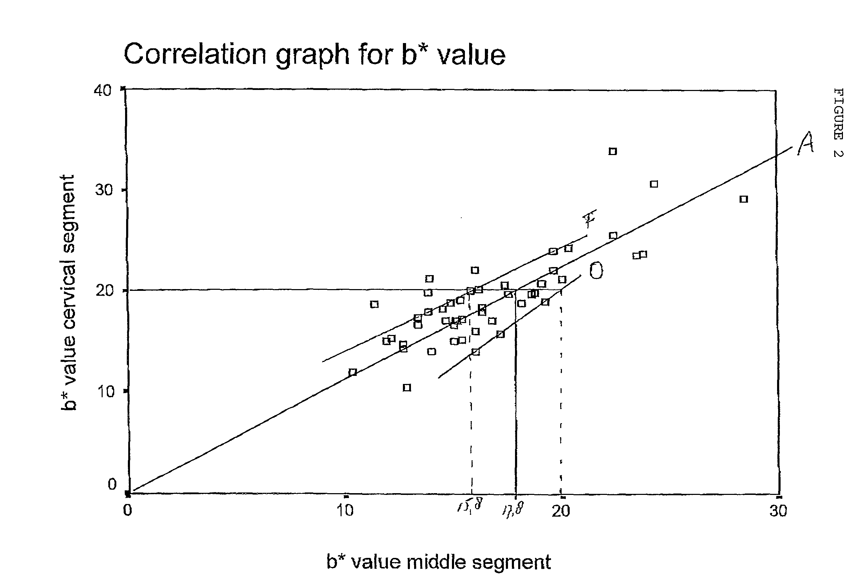

Figure 2 shows a graph wherein for a number of teeth the value of the standard colour parameter b* as determined at the cervical segment is plotted against the value of the standard colour parameter b* of the middle segment. The standard colour parameter b* is one of the three CIE L*a*b* coordinates which together define a colour in the CIE L*a*b* 3-D space. The other two colour parameters are L* and a*. If for instance the value of the standard colour parameter b* of the cervical segment is determined to be 20, the value of the standard colour parameter b* of the middle segment is using a predetermined relationship as represented by line A in figure 2, determined to be 17.8. The relationship between the value of the standard colour parameter b* of the cervical segment and the value of the standard colour parameter b* of the middle segment as represented by line A in figure 2 may be the result of a well-known lease square fit taking into account all the data points shown in figure 2. (Graphs which are similar to the graphs shown in figure 2 are available for the other colour parameters a* and L* which also belong to the 3-D CIE L*a*b* colour space.) The colour of a segment is determined by carrying out for each colour coordinate L*, a* and b* the above-mentioned determination.

It may also be possible that tooth 2 is completely missing from the set of teeth 1. In that case tooth 2 has to be produced in its entirety. Given the symmetry in the set of teeth 1, the colour of each segment of teeth 2 may be determined using a predetermined relationship between the colour and the position of a corresponding segment and the position of the segment which is to be produced. In this particular case the relationship is a very simple one in the sense that the colour of the cervical segment of tooth 2 should be equal to the colour of the cervical segment of tooth 3.

In a very different situation, tooth 3 may be completely lacking from the set of teeth and the middle and incisal segment of tooth 2 are equally lacking so that within the set of teeth of tooth 2 only the cervical segment C remains present. In that case, the predetermined relationship used for determining the middle and incisal segments M, I which are to be produced for the tooth 2 may be based on experimental data obtained from other sets of teeth. Preferably these data were taken of sets of teeth with an age similar to the age of the set of teeth for which the segments need to be produced. If for instance the set of teeth for which segments need to be produced is 40 years old the predetermined relationship may be represented by line F in figure 2. If in this case the value of the standard colour parameter b* of the cervical segment of tooth 2 is measured to be 20, the value of the standard colour parameter b* of the middle segment of tooth 2 is according to the predetermined relationship determined to be 15.8.

In another embodiment according to the invention the predetermined relationship may be based on for instance the relationship between the value of the standard colour parameter b* for the cervical segment C of tooth 4, 5 and 6 and the value of the standard colour parameter b* determined for the middle M segment of the respective teeth 4, 5 and 6. If for instance these relationships for the teeth 4, 5 and 6 are represented by line O in figure 2, the value of the standard colour parameter b* of the middle segment M should be 20 in a situation where the value of the standard colour parameter b^{*} of the cervical segment is 20.

Preferably a predetermined relationship used in the method according to the invention is established using a personal parameter of a patient for whom the colour of a segment of the set of teeth is to be determined for production of that segment. Such a personal parameter may as explained above be the age of a patient. However, it is also possible that the personal parameter is related to a nutritional pattern of a patient or a personal preference of a patient. In the latter case the patient may for instance have expressed the wish to obtain segments of teeth which are whiter than they should be according to application of the method without using this personal parameter of the patient. Although only one graph is shown for the relationship between the standard colour parameters b* for the cervical segment C and the middle segment M of a tooth these relationships also exist for the standard colour parameter L* and the standard colour parameter a* of the colour space L*, a*, b*. Also measured relationships between colours of the other mutually different positions within a tooth or a set of teeth can be obtained.

Preferably the method according to the invention comprises not only providing the standard colour parameters but also comprises showing in a display 8 the colour of the segment to be produced and the colour of the segment which is measured. This display is preferably also arranged to show the colours as defined by the colour parameters.

Even more preferable is that the method comprises showing on the display the colour of the segment to be produced and the measured colour of one or more other segments of the set of teeth in relation to their mutual positions within the set of teeth. Even more preferable is that the method comprises showing on the display 8 the colour of the segment to be produced and the colour of each segment of the set of teeth and the position of each segment within the set of teeth. In other words, in this embodiment a complete set of teeth is shown on the display, allowing a dentist, technician or patient to agree before production of the desired segment on the required colour for that segment. It is even conceivable that the display shows a complete image of the face of the patient, allowing for a full assessment of the appearance before the segment is produced. Of course it is also possible to use a printer 9 for printing out images which are shown on the display 8. It is in that situation obviously preferable that also printer 9 produces exactly the colours as defined by their standard colour parameters.

It is clear that computer 5 preferably comprises a memory with a database in which information is stored about the relationship between the position and the colour of a number of segments within a number of sets of teeth which is at least one. The steps to be carried out by computer 5 may be downloaded from a computer program product comprising code portions for carrying our these steps when running on a programmable system. This computer program product may further comprise code portions related to the position and the colour of a number of segments within the number of sets of teeth. This database may be regularly updated to allow for even higher accuracy of the colour which needs to be determined for a segment that is meant to be produced for a position within a set of teeth.

It is equally clear that for all the embodiments determining the colour of any segment may comprise determining the value of each of the colour defining parameters. The value of a particular colour defining parameter may be determined on the basis of a relationship between the value of that particular colour defining parameter for an at least second segment, the position of the at least second segment and the position of a first segment.

Many variations and extensions all within the scope of the invention are possible.

Determination of the colour of one or more of the existing segments of the set of teeth may take place using any other suitable instrument. It is also possible to quantify a colour, using any other suitable standard with well-defined colour parameters.

The colour which is determined for the segment to be produced may be found by a process of interpolation with respect to existing data but also by a process of extrapolation.

A colour may also be determined for an addition to a set of teeth such as for instance at a position where a gab exists between two teeth. Such a gab is shown in figure 1 between tooth 3 and 4 at position G.

All the variations are understood to fall within the framework of the invention as defined by the appended claims.

## Claims

1. Method for determining a desired colour of a first segment for forming a portion of a set of teeth on a desired position within the set of teeth, wherein the method comprises:
• determining the colour of at least a second segment within the set of teeth,
**characterised in that**, the method further comprises:
• determining the position of the at least second segment within the set of teeth; and
• determining the colour of the first segment according to a predetermined relationship between the colour and the position of the at least second segment and the desired position for the first segment.

2. Method according to claim 1, **characterized in that**, the colour is defined by a number of colour defining parameters, wherein determining the colour comprises determining a value of each the colour defining parameters.

3. Method according to claim 1 or 2, **characterised in that** the method comprises
• using a digital camera for measuring the colour and the position of the at least second segment.

4. Method according to claim 3, **characterised in that**, the method comprises colourimetrically analysing an image obtained by the digital camera for obtaining a quantification for each colour.

5. Method according to any one of the previous claims, **characterised in that** the method comprises establishing the predetermined relationship using at least the determined colour and position of a plurality of segments within the set of teeth.

6. Method according to any one of the previous claims, **characterised in that**, the method comprises establishing the predetermined relationship using a database in which is stored information about the relationship between the position and the colour of a number of segments within at least one other set of teeth.

7. Method according to any one of the previous claims, **characterised in that** the method comprises establishing the predetermined relationship using at least a personal parameter of a patient for whom the colour of the first segment is to be determined.

8. Method according to claim 7, **characterised in that** the personal parameter is an age of the patient, a nutritional pattern of the patient or a personal preference of the patient.

9. Method according to any one of the previous claims, **characterised in that**, the method comprises showing on a display the colour of the first segment and the colour of the at least second segment.

10. Method according to claim 9, **characterised in that** the method comprises showing on the display the colour of the first segment and the colour of the at least second segment in relation to their mutual positions within the set of teeth.

11. Method according to claim 9 or 10, **characterised in that** the method comprises showing on the display the colour of each segment of the set of teeth and the position of each segment within the set of teeth.

12. Computer comprising a processor which is a arranged to carry out steps of a method according to claim 4-8.

13. Computer according to claim 12, **characterised in that**, the computer further comprises a memory with a database in which is stored information about the relationship between the position and the colour of a number of segments within a number of sets of teeth.

14. Computer program product comprising code portions for carrying out steps of a method according to claim 4-8 when running on a programmable system.

15. Computer program product according to claim 14, **characterised in that** the computer program product further comprises code portions related to the position and the colour of a number of segments within a number of sets of teeth.
